# EUROPEAN PATENT APPLICATION

(11) **EP 1 308 612 A1**
(43) Date of publication of application: **07.05.2003**
(21) Application number: 01309204.4
(22) Date of filing: 30.10.2001
(51) Int. Cl.: F02D 9/10, F16K 27/02

(54) **Electronic throttle body made of two plastic materials having different strength**

(71) Applicant: Visteon Global Technologies, Inc., Dearborn, Michigan 48126-2490 (US)
(72) Inventor: Stephens, Gordon, Northern Ireland, BT30 9LY (GB); Sims, Marc, Essex, SS7 5AS (GB)
(74) Representative: McLean, Robert Andreas

(57) **Abstract**

The present invention relates to a moulded electronic throttle body (1) for controlling a flow of air (14), for example in an internal combustion engine. The electronic throttle body (1) comprises a housing (2) having a first part (4) having an air passage (8) therethrough and in the passage (8) a valve seat (10) and a throttle valve (12) that can be moved with respect to the valve seat (10) to open and close the passage (8) to control said flow of air (14). A second part of the housing (6) has one or more mounts (15-18) therein and an electronically driven throttle actuator (20) secured to said mounts (15-18). The housing (2) is formed from a first moulded plastics material (24) co-moulded with a second moulded plastics material (26), the temperature stability and/or creep stability of the first material (24) being superior to that of the second material (26). Both the valve seat (10) and the throttle actuator mounts (15-18) are formed in the first material (24), the first material (24) extending contiguously between the valve seat (10) of the first part of the housing (4) and the throttle actuator mounts (15-18) of the second part of the housing (6).

## Description

The present invention relates to a moulded electronic throttle body, for use with an internal combustion engine.

Internal combustion engines often have a throttle assembly to control the amount of air supplied to combustion chambers. It is now common for such throttle assemblies to be controlled electronically, that is by means of an electric motor controlled by and engine control unit that is responsive to a driver demand signal. Because the throttle only has to turn up to 90° between closed and wide open throttle (WOT), the motor is connected to the throttle element, usually a throttle plate on a throttle shaft, the motor is connected to the throttle shaft via a reduction gear arrangement.

The throttle assembly is usually subject to a wide range of environmental stresses, particularly a wide range of operating temperatures. The may range from below -30 °C during cold start conditions during a continental winter, to nearly 100 °C during hot running in summer. The throttle plate needs to fit within close tolerances for clearance with surrounding surfaces, for example about 0.2 ± 0.1 mm for a throttle plate about 50 mm in diameter. The mounts for the electric motor, and mountings for the reduction gearing arrangement and throttle shaft, have to be closely aligned with one another, and free from significant wear over the lifetime of the assembly, which should be in excess of 10 years or 150,000 miles. The need for close alignment is vital and wear resistance is more important for the plastic shafts and gears commonly used in such assemblies in place of similar metal components.

Because of these considerations, and in spite of the fact that it is generally desirable to replace metal parts with plastic parts whenever possible in automotive applications, both for reduced manufacturing cost and weight, commercially available electronic throttle bodies continue to be manufactured using machined metal housings.

It is an object of the present invention to provide a lightweight and more convenient and economical electronic throttle body for a motor vehicle.

Accordingly, the invention provides a housing for an electronic throttle body, comprising a electronic throttle body for controlling a flow of air, characterised in that the electronic throttle body comprises a housing having a first part and a second part, the first part of the housing having an air passage therethrough and in the passage a valve seat and a throttle valve that can be moved with respect to the valve seat to open and close the passage to control said flow of air through the passage, and the second part of the housing having one or more mounts therein and an electronically driven throttle actuator secured to said mounts and linked to the throttle valve for controlling the opening and closing of the throttle valve, wherein: the housing is formed from a first moulded plastics material co-moulded with a second moulded plastics material, the temperature stability and/or creep stability of the first material being superior to that of the second material; and both the valve seat and the throttle actuator mounts are formed in the first material, the first material extending contiguously between the valve seat of the first part of the housing and the throttle actuator mounts of the second part of the housing.

The properties of many plastic materials can change either with varying temperature, or with normal ageing of the material over many years. Relatively inexpensive plastics, such as glass-filled nylon, do not have sufficient stability for use in forming the body of an electronic throttle assembly in motor vehicle applications.

It is possible to form such an assembly using much more expensive, high-performance plastic materials, such as glass-filled polyphenol sulfide (PPS) or glass-filled polyether imide (PEI). However, such an assembly is more expensive to manufacture than a conventional assembly using metal. It has been found, however, that the high performance properties of such plastics are not needed throughout a throttle body. The invention therefore provides a co-moulded throttle body, where a low performance plastic can be used for the overall mechanical form and strength of the assembly, while high performance plastic is used in such a way that parts of the throttle that need to have high stability, such as the throttle valve itself and mounts for the throttle actuator, are held together within the required tolerances over the temperature ranges and lifetime required in a particular application, such as a motor vehicle electronic throttle.

Therefore, apart from the valve seat and the throttle actuator mounts, it is preferred if the first and second housing are formed predominantly from the second material.

In a preferred embodiment of the invention, the throttle valve is a butterfly valve towards one end of a connecting rod or shaft between the valve and the throttle actuator. The invention is, however, applicable to other types of throttle, for example throttles using a needle valve.

The throttle actuator may include an electric motor having an output drive for powering the throttle actuator. One mount of the second housing may be an aperture in the housing formed in the first material for securing the motor to the second housing. The motor may then be mounted in the aperture so that a portion of the motor protrudes from the second housing when secured, and with the motor output drive then is held within the second housing. This helps to reduce the weight of the assembly, because the motor will normally have its own casing that does not need to be fully enclosed in the second housing.

The throttle actuator may include a gearing mechanism with one or more gear shafts, one end of each gear shaft being held by corresponding one or more of the throttle mounts, and the other end of said shaft (s) being held by corresponding one or more location features an access cover to the second housing. In a preferred embodiment of the invention, it is not necessary for this access cover to be formed in the first material.

The invention will now be further described, by way of example only, and with reference to the accompanying drawings, in which:
Figure 1 is a perspective view of an electronic throttle body according to the invention, having a first housing for a butterfly valve and a second housing for a throttle actuator;
Figure 2 is an exploded perspective view of the electronic throttle of Figure 1, showing also an access cover for the second housing;
Figure 3 is a perspective view of the electronic throttle body of Figure 1, without the butterfly valve and throttle actuator, showing use of two types of co-moulded plastics materials, referred to herein as a first type and a second type of material;
Figure 4 is a perspective view similar to Figure 3, showing the shape of only the second type of moulded plastic material used in the throttle body;
Figure 5 is a partially cut away perspective view similar to Figure 3, showing both the first type of material and the second type of material; and
Figures 6 and 7 are, respectively, a perspective view similar to that of Figure 3, and a top view, of only the first type of plastic material used in the throttle body.

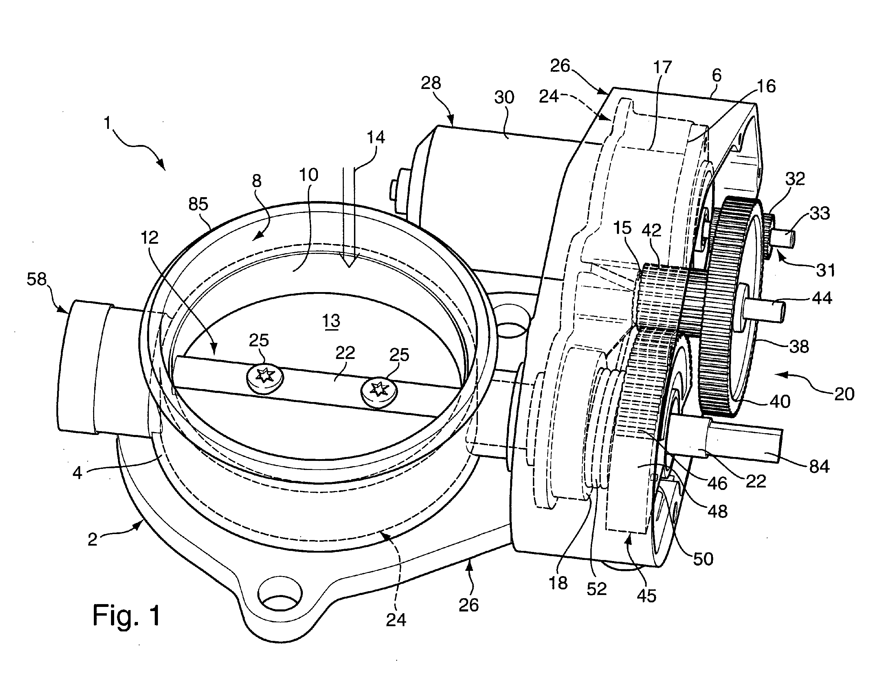

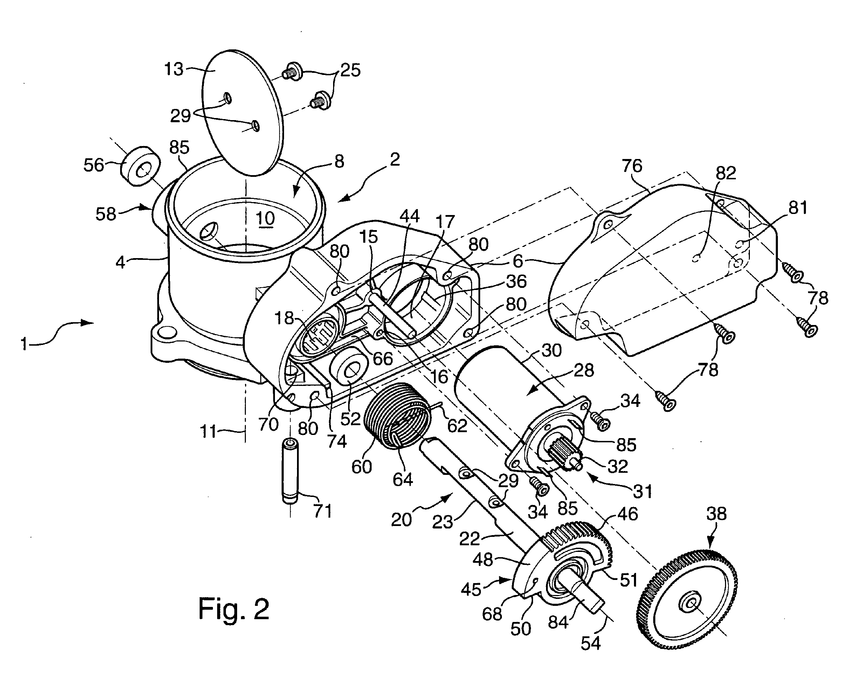

Referring first to Figures 1 and 2, an electronic throttle body 1 has a housing 2 having a first part 4 and a second part 6. The first part 4 of the housing has an air passage 8 therethrough and in the passage a valve seat 10 and a throttle valve 12, here a slightly elliptical butterfly valve plate 13, that can be moved with respect to the valve seat 10 to open and close the passage 8 to control a flow of air 14 through the passage. The second part 6 of the housing 2 has one or more mounts 15,16,17,18 therein.

The air passage 8 is almost cylindrical in shape about an axis 11 parallel to the direction of the air flow 14, with a slight narrowing at the valve seat 10 so that the valve plate 13 makes a close fit with the valve seat when the valve 12 is closed.

The first housing 4 and the second housing 6 are then spaced apart side-by-side along a direction transverse to the air flow axis 11.

An electronically driven throttle actuator 20 is secured to the mounts 15-18 and linked to the throttle valve 12 by means of a generally cylindrical connecting rod 22 for controlling the opening and closing of the throttle 12.

The butterfly plate 13 is connected to a flat portion 23 of the rod 22 by means of two screws 25 that pass through two clearance holes 27 in the rod into matching threaded holes 29 in the plate 13.

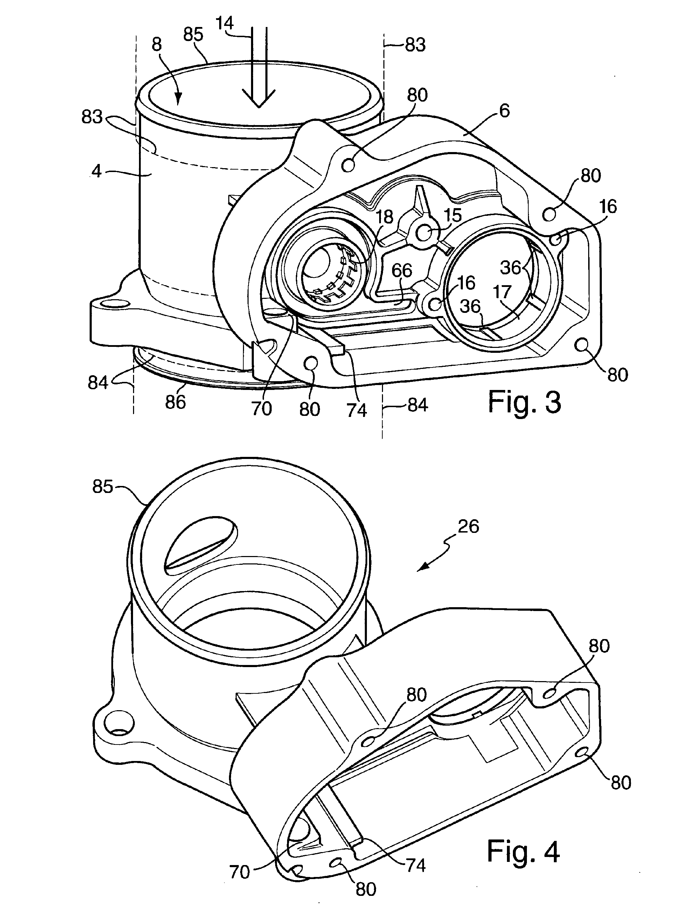

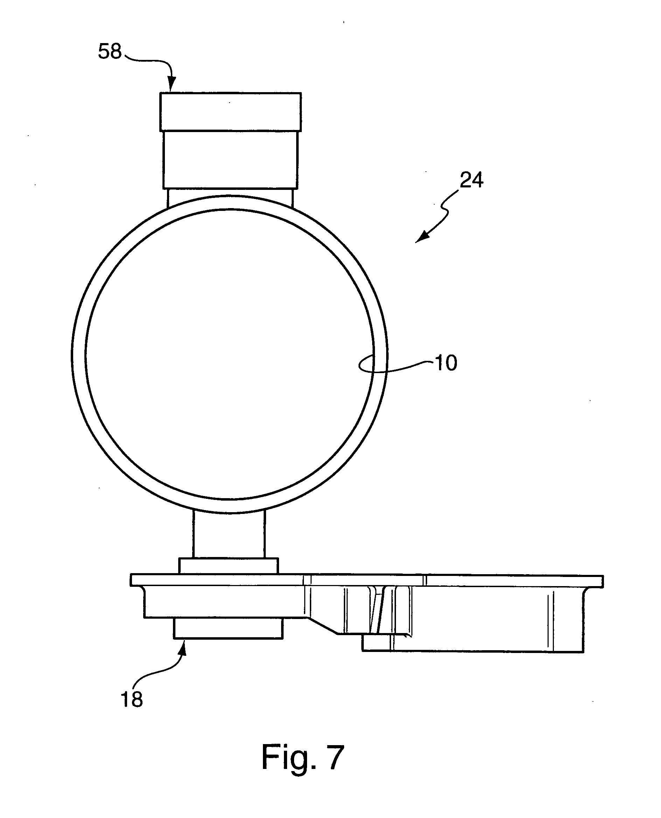

With reference now also to Figures 3-7, the housing 2 is formed from a first moulded plastics material 24 co-moulded with a second moulded plastics material 26. The first material 24 is a glass-filled PES material with a relatively high temperature stability and creep stability, and the second material is a glass-filled nylon material with a relatively lower temperature stability and creep stability.

Both the valve seat 10 and the throttle actuator mounts 15-18 are formed in the first material 24, which extends without a break between the valve seat 10 of the first part 4 and the throttle actuator mounts 15-18 of the second part 6.

The first part of the housing and the second part of the housing are integrally formed, one with the other, in a two-stage co-moulding process, in which the first material 24 is first injection-moulded, and then the second material 26 is moulded over the first material, substantially embedding the first material within the second material, except for necessary exposed portions, such as the valve seat 10 and the mounts 15-18.

The throttle actuator 20 comprises an electric motor 28 having a casing 30, and an output drive 31 in the form of a toothed wheel 32 on a drive shaft 33. The casing 30 is cylindrical, and is mounted to the first material 24 in the second housing 6 by mounts 16 and 17, which are respectively, a pair of threaded bores 16 for receiving matching screws 34, and a cylindrical aperture 17 in the first material 24 formed with ribs 36 that provide an interference fit to grip the casing 30 tightly when the casing is inserted in the aperture 17.

A reduction gear 38 has another toothed wheel 40 of larger diameter that engages with the motor output drive 31, and co-axial with and affixed to this larger toothed wheel 40 a small toothed wheel 42. The reduction gear 38 rotates on a gear spindle 44 that is mounted to the first portion 24 at mount 15, which is a matching cylindrical recess in the first portion 24.

The smaller toothed wheel 42 engages with a cog 45 having a series of teeth 46 that extend on an annular portion 48 of the cog over an arc of just over 90°. The annular portion 48 has a larger radius than that of the smaller toothed wheel 42, to reduce still further the drive from the motor 28.

The annular portion 48 extends across 180° and is bounded by a pair of flat surfaces 50,51 that extend radially inwards of the annular portion 48.

The cog 45 is joined axially to the connecting rod 22 so that the cog turns the connecting rod 22, and hence the butterfly plate 13, when the cog 45 is rotated by the reduction gear 38.

Prior to connection of the butterfly plate 13 to the rod 22, a cylindrical teflon bearing ring 52 is inserted over the rod 22 and against the cog 45. The bearing ring 52 then holds the rod in a close sliding fit. One mount 18 for the throttle actuator is a cylindrical sleeve 18 in the first material 24, that opens through to the passage 8 in the first housing 4. The bearing ring 52 is sized to make a close sliding fit with the cylindrical inner surface of the mount 18, so that when the rod 22 is inserted into the sleeve and through the passage 8, the rod 22 can rotate freely about an axis 54 that passes at right angles through the axis 11 of the air passage 8.

A similar second cylindrical bearing ring 56 is seated in a similar second cylindrical mount 58 formed in the first material 24 to secure the rod 22 on an opposite side of the valve 12. The cylindrical mounts 18,58 then act as bearings for the rotation of the rod 22.

Prior to insertion of the rod through the mounts 18,58, a coiled wire spring 60 is inserted over the first cylindrical mount 18. The spring has two free ends 62,64, one of which engages within a slot 66 in the first material to prevent free rotation of the spring on the mount 18, and the other of which 64 inserts into a small hole 68 in the cog annular portion 48.

When the rod 22 is secured by the bearing rings 52,56 and the mounts 18,58, the coil spring spring-biases the rod 22 and cog 45 so that in the absence of any drive from the motor 28, one flat surface 50 of the cog 45 is brought up against another flat surface 70 on the second material 26 within the second housing 6. In this orientation, the butterfly plate 13 lies transversely across the valve seat 10 to block the flow of air 14 through the air passage 8.

A rod device71 fits into the hole 70 and forms a limp-home stop and closed plate adjustment device. The rod device 71 is hollow and telescopic, and can compress by a specified distance. A spring (not shown) is contained within the rod. In the free-state, the spring holds the device in its extended position. When sufficient force is applied to deflect the spring fully, the rod is compressed by a set distance. The force to overcome the spring is applied by the gear 50, powered through the geartrain by the motor.

During manufacture, the device 71 is screwed into hole 70, and set to a position such that in the compressed state, the throttle valve is allowed to close to a position which gives the minimal airflow required by the engine. In the free-state, the position of the throttle valve is sufficiently open to provide a limp-home capability.

The other flat surface 51 of the cog 45 comes up against another flat surface 74 on the second material 26 within the second housing 6, when the cog 45 has been rotated by 90° by the reduction gear 38 and motor 28. In this orientation, the butterfly plate 13 lies parallel with the axis 11 of the air passage 8 so that air 14 can flow freely through the air passage 8.

Because of the stability provided by the first material 24, the gearing components 32,38,42,45 can all be moulded in plastic. Otherwise, it might be necessary for the gears to be formed in higher cost metal, which has greater resistance to wear caused by misalignment in gears.

Once all the components of the throttle actuator 20 are in place as described above, a cover 76 is secured over the throttle actuator 20 by means of four screws 78 that engage with four matching holes 80 in the second material 26 of the second housing 6. The cover 76 has inner mounting features 81,82 for holding the motor drive shaft 33 and reduction gear spindle 44. Not shown is an optical encoder that connects to a flat end portion 84 of the connecting rod 22 for measuring the degree of rotation of the rod 22, and electrical connections to contact terminals 85 on the motor 28 and to the optical encoder.

The cover 76 is formed from the lower performance second material 26. Because all the components of the throttle actuator 20, apart from the encoder (not shown) are secured at least at one point with respect to the higher performance first material 24, there is no need for these components to be secured with the same high precision by the mounts 81,82 within the access cover 76.

The second housing 6 therefore has an access cover 76 that is removably attached to the remainder of the second housing, with the access cover being formed from the second material.

As shown in Figure 3, air lines 83,84 are connected to the throttle body 1 at upper and lower rims 85,86, either side of the throttle valve 12. The rims 85,86 are formed in the lower performance second material 26, with the air passage axis 11 extending vertically.

In a motor vehicle application, the throttle body 1 is normally supported mainly by the lower rim 86. Although the first housing itself is centered above the lower rim 86, the second housing is to one side of the axis 11. The throttle actuator 20, and particularly the motor 30, are relatively heavy compared with the first and second housings 4,6. It has been found that the weight if these off-centre components, particularly in the hot environment near a motor vehicle engine, can cause distortion of moulded plastic components, unless these are carefully designed using higher performance plastics. Therefore, the motor projects from the second housing somewhat back towards the central axis 11. The first material also extends contiguously from the first housing 4 to the second housing 6.

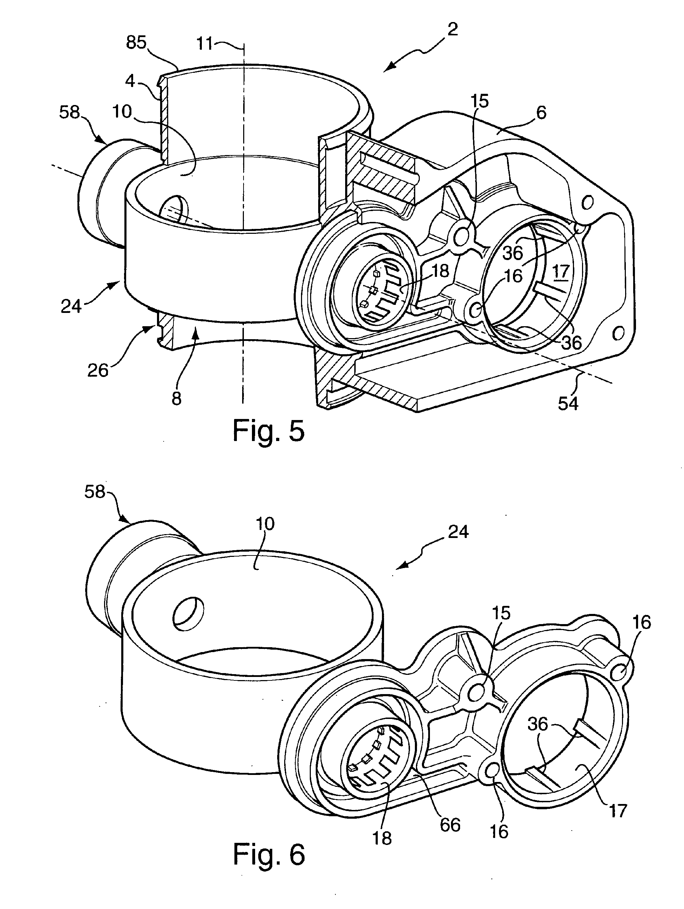

As can be seen from the drawings, particularly Figures 5 to 7, the volume of second material 26 used significantly exceeds that of the first material 24, and so the mass of the second material exceeds the mass of the first material. The second material 26 therefore provides much of the overall strength of the throttle assembly, while stability of components requiring higher mechanical precision is supplied by the first material 24.

The invention therefore provides a moulded plastic electronic throttle body that is economical to manufacture in comparison with metal electronic throttle bodies, and which provides good reliability and lifetime in automotive applications.

## Claims

1. An electronic throttle body (1) for controlling a flow of air (14), **characterised in that** the electronic throttle body (1) comprises a housing (2) having a first part (4) and a second part (6), the first part of the housing (4) having an air passage (8) therethrough and in the passage (8) a valve seat (10) and a throttle valve (12) that can be moved with respect to the valve seat (10) to open and close the passage (8) to control said flow of air (14) through the passage (8), and the second part of the housing (6) having one or more mounts (15-18) therein and an electronically driven throttle actuator (20) secured to said mounts (15-18) and linked (22) to the throttle valve (12) for controlling the opening and closing of the throttle valve (12), wherein: the housing (2) is formed from a first moulded plastics material (24) co-moulded with a second moulded plastics material (26), the temperature stability and/or creep stability of the first material (24) being superior to that of the second material (26); and both the valve seat (10) and the throttle actuator mounts (15-18) are formed in the first material (24), the first material (24) extending contiguously between the valve seat (10) of the first part of the housing (4) and the throttle actuator mounts (15-18) of the second part of the housing (6).

2. An electronic throttle as claimed in Claim 1, in which apart from the valve seat (10) and the throttle actuator mounts (15-18), the first and second parts of the housing are formed predominantly from the second material (26).

3. An electronic throttle body (1) as claimed in Claim 1 or Claim 2, in which the mass of the second material (26) exceeds the mass of the first material (24).

4. An electronic throttle body (1) as claimed in any preceding claim, in which the first part of the housing (4) and the second part of the housing (6) are integrally formed, one with the other.

5. An electronic throttle body (1) as claimed in any preceding claim, in which the throttle actuator (20) is linked to the throttle valve (12) by means of a connecting rod (22) that is movable by the throttle actuator (20) to open and close the throttle valve (12), wherein the first material (24) forms bearings (18,58) for movement of the connecting rod (22).

6. An electronic throttle body (1) as claimed in Claim 5, in which the throttle valve is a butterfly valve (12) towards one end of the connecting rod (22).

7. An electronic throttle body (1) as claimed in any preceding claim, in which the passage (8) through the first part of the housing (4) defines an air flow axis (11), and the first part of the housing (4) and the second part of the housing (6) are spaced apart side-by-side along a direction transverse to the air flow axis (11).

8. An electronic throttle body (1) as claimed in any preceding claim, in which the second part of the housing (6) includes an access cover (76) that is removably attached to the remainder of the second part of the housing (6), and the access cover (76) is formed from the second material (26).

9. An electronic throttle body (1) as claimed in Claim 8, in which the throttle actuator (20) includes a gearing mechanism (32,38,42,46) with one or more gear shafts (44), one end of each gear shaft (44) being held by corresponding one or more of the throttle mounts (15), and the other end of said shaft(s) being held by corresponding one or more location features (82) in the access cover (76).

10. An electronic throttle body (1) as claimed in any preceding claim, in which: the throttle actuator (20) includes an electric motor (28); the motor (28) has an output drive (31) for powering the throttle actuator (20) ; one mount of the second part of the housing (6) is an aperture (17) in the housing (2) formed in the first material (24) for securing the motor (28) to the second housing (6), and from which aperture (17) a portion of the motor (30) protrudes from the second part of the housing (6) when secured so that the motor output drive (31) then is held within the second part of the housing (6).
